(19) Europäisches Patentamt
European Patent Office
Office européen des brevets

(11) **EP 4 435 253 A1**

(12) **EUROPEAN PATENT APPLICATION**

(43) Date of publication:
**25.09.2024  Bulletin 2024/39**

(21) Application number: **23163478.3**

(22) Date of filing: **22.03.2023**

(51) International Patent Classification (IPC):
**F03D 7/02** (2006.01)  **F03D 13/25** (2016.01)
**F16F 7/10** (2006.01)

(52) Cooperative Patent Classification (CPC):
**F03D 7/0296; F03D 13/256; F16F 7/1005;**
F05B 2260/964; F16F 2232/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOTALENERGIES ONETECH
92400 Courbevoie (FR)**

(72) Inventors:
• **GENTIL, Frédéric
92400 COURBEVOIE (FR)**

• **DE LATAILLADE, Tristan
92400 COURBEVOIE (FR)**
• **AHMEDI, Arsim
92400 COURBEVOIE (FR)**
• **CAPALDO, Mattéo
92400 COURBEVOIE (FR)**

(74) Representative: **Plasseraud IP
104 Rue de Richelieu
CS92104
75080 Paris Cedex 02 (FR)**

(54) **AN ACTIVE VIBRATION CONTROLLING DEVICE FOR A WIND TURBINE**

(57)    It is disclosed an active vibration controlling device (10) for a wind turbine (20) having a mast (21), a nacelle (22) and a plurality of rotating blades (230), the device comprising
- at least one inertial mass (11), and
- a driving device (12) suitable for driving the mass in translation along an axis,
wherein the active vibration controlling device is configured for driving the mass according to an oscillatory movement suitable to generate a variable load on the wind turbine counteracting oscillations produced at at least one excitation frequency of the wind turbine.

FIG. 4

EP 4 435 253 A1

## Description

## Technical Field

This disclosure relates to an active vibration controlling device for a wind turbine and a wind turbine incorporating the same.

## Background Art

Wind turbines, and in particular floating wind turbines, are subject to vibrations caused by various environmental loads such as wind, currents, and vibrations generated by the operation of the wind turbine itself, such as the rotational speed of the rotor, which may be referred to as 1p frequency, and the vibrations induced by the blades passing in front of the mast of the wind turbine, which is generally referred to as 3p frequency since wind turbine generally comprise three blades.

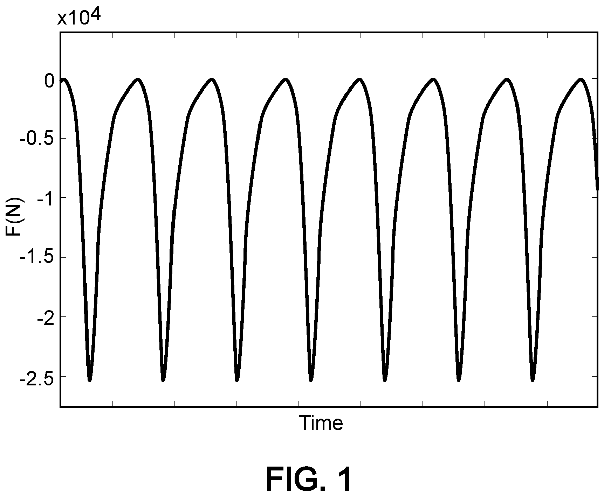

Those vibrations induce stress and fatigue on the structure of the wind turbine, as is apparent from figure 1 which represents the variation of force exerted on the mast by each blade passage in front of the mast of the wind turbine. This force extends perpendicularly to the axis of the mast and along the nacelle (which is orientable according to the direction of the wind) and is variable with time since it varies with the angular position of the blades.

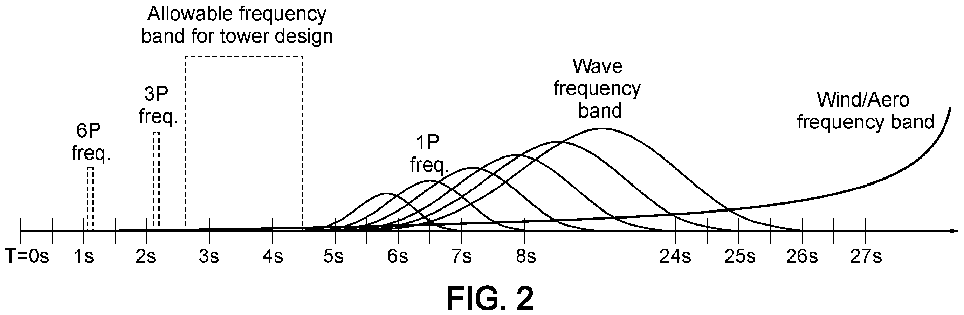

Furthermore, the structure of the wind turbine has its own natural frequencies, which depend on the sizing of the turbine, and the wind turbine must be designed such that a frequency gap is maintained between the natural frequencies of the turbine and the excitation frequencies of the environmental loads. This constraint is particularly harsh for floating wind turbines, as shown in the frequency diagram of figure 2, because the allowable frequency range is limited on one hand by the 3p excitation frequency and on the other hand by the band of excitation frequencies caused by the waves. Furthermore, floating wind turbines tend to have more massive designs than terrestrial wind turbines, which leads to an increase of the 3p frequency which further narrows the range of allowable frequency range for natural frequencies.

## Summary

This disclosure improves the situation.

One aim of the present disclosure is to propose an active vibration controlling device for a wind turbine, which is configured for counteracting vibrations occurring within the wind turbine at at least one excitation frequency. In particular, an aim of the present disclosure is to remove vibrations induced at the 3p excitation frequency, i.e. the vibrations induced by the blades of the wind turbine passing in front of the mast.

It is proposed an active vibration controlling device for a wind turbine having a mast, a nacelle and a plurality of rotating blades, the device comprising

-    at least one inertial mass, and

-    a driving device suitable for driving the mass in translation along an axis,

wherein the active vibration controlling device is configured for driving the mass according to an oscillatory movement suitable to generate a variable load on the wind turbine counteracting oscillations produced at at least one excitation frequency of the wind turbine.

In embodiments, the at least one excitation frequency of the wind turbine is the frequency of the rotating blades passing in front of the mast.

In embodiments, the translation axis is perpendicular to the direction of the mast of the wind turbine.

In embodiments, the driving device comprises a rod-crank system.

In embodiments, the active vibration controlling device further comprises an enclosure containing at least the inertial mass and driving device, and the enclosure is mounted on an outer wall of the wind turbine.

In embodiments, the active vibration controlling device further comprises a controller, configured to receive information relative to the operation of the wind turbine, and to control the driving device to drive the motion of the inertial mass according to the received information.

In embodiments, the driving device comprises an electrical motor and an actuator, and the active vibration controlling device further comprises a source of electrical energy chosen among a battery of the active vibration controlling device and a connection interface to an electrical system of the wind turbine.

According to another aspect, it is disclosed a wind turbine comprising a mast, a nacelle and a plurality of rotating blades, the wind turbine further comprising an active vibration controlling device according to the description above.

In embodiments, the active vibration controlling device is located within the nacelle.

In embodiments, the wind turbine comprises a rotor rotatably mounted on the nacelle and on which are mounted the blades, and wherein the driving device of the active vibration controlling device comprises a mechanical transmission device for drawing rotational power from the rotor, and a conversion device suitable for converting the rotational power into the oscillatory movement of the mass.

In embodiments, the wind turbine comprises a rotor rotatably mounted on the nacelle and on which are mounted the blades, wherein the driving device of the active vibration controlling device comprises an electrical motor having an output shaft, a source of electrical energy feeding the electrical motor, chosen among an electrical system of the wind turbine and an alternator configured for converting rotational power of the rotor into electrical power, and the driving device further comprises a conversion device for converting a rotational power of the electrical motor's output shaft into the oscillatory movement of the mass.

In embodiments, the mechanical transmission device comprises one of a gearbox, a toothed pulley or chain.

In embodiments the wind turbine is a floating wind turbine.

The active vibration controlling device disclosed above enables reducing fatigue induced by vibrations on a wind turbine by urging an inertial mass according to an oscillatory movement which is opposed to oscillations produced at at least a determined excitation frequency of the wind turbine. In particular, the phase and frequency of the oscillatory movement of the mass may be selected in order to counteract a determined excitation frequency, for instance the 3p frequency at which the blades pass in front of the mast.

According to an embodiment, the active vibration controlling device may be contained in an enclosure that can be mounted on an outer wall of the turbine, the electrical supply of the active vibration controlling device being provided by the generator of the wind turbine, to which the active vibration controlling device may be connected via an electrical interface. Accordingly, an active vibration controlling device may be assembled to an existing wind turbine without requiring any change in the design or manufacturing of the wind turbine.

**Brief Description of Drawings**

Other features, details and advantages will be shown in the following detailed description and on the figures, on which:

- Fig. 1 represents the force variation from a maximum value applied on the mast of a wind turbine, due to the passage of a blade in front of the mast.

- Fig. 2 represents an example of frequency diagram applicable to a floating wind turbine, displaying the excitation frequencies of the turbine induces by the rotor and blades, as well as the frequency bands of the waves and wind.

- Fig 3a schematically represents a wind turbine integrating an active vibration controlling device according to an embodiment.

- Fig. 3b schematically represents a wind turbine integrating an active vibration controlling device according to another embodiment.

- Fig. 4 schematically represents an active vibration controlling device as a stand-alone device according to an embodiment.

- Fig. 5a and 5b represent examples of possible locations of an active vibration controlling device.

- Fig. 6 represents an example of simulation of an axial load applied to the mast of a wind turbine with and without implementing an active vibration control.

**Description of Embodiments**

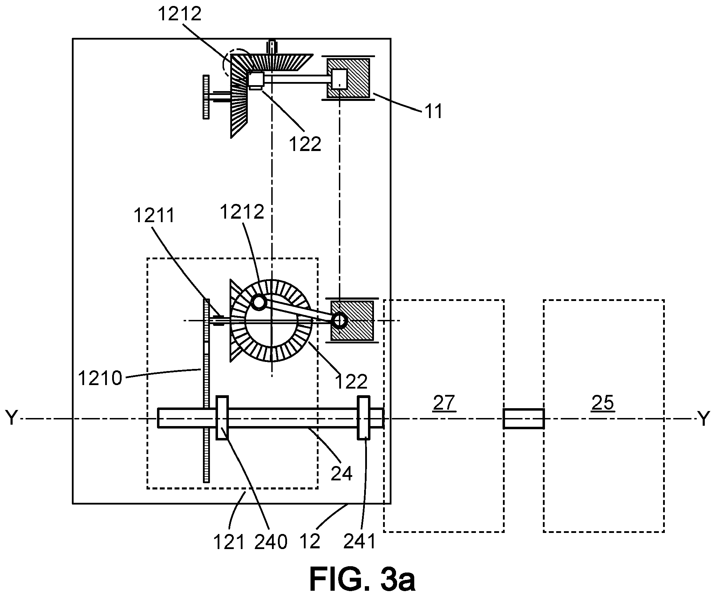

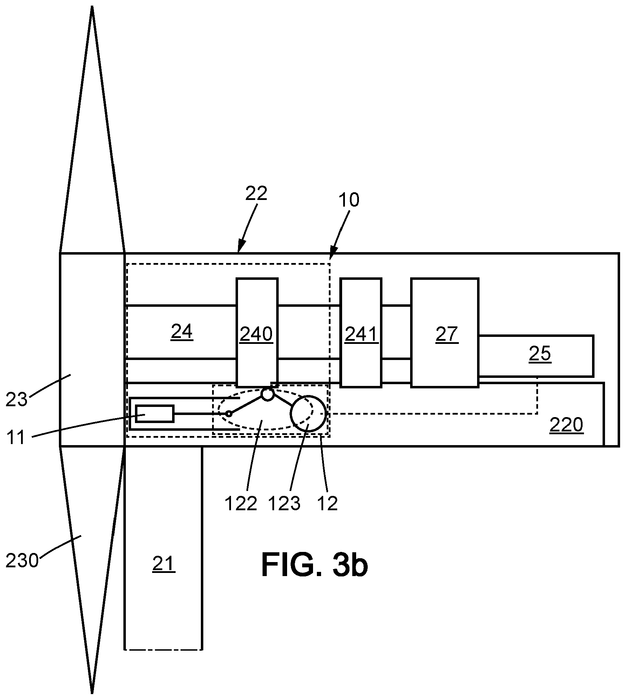

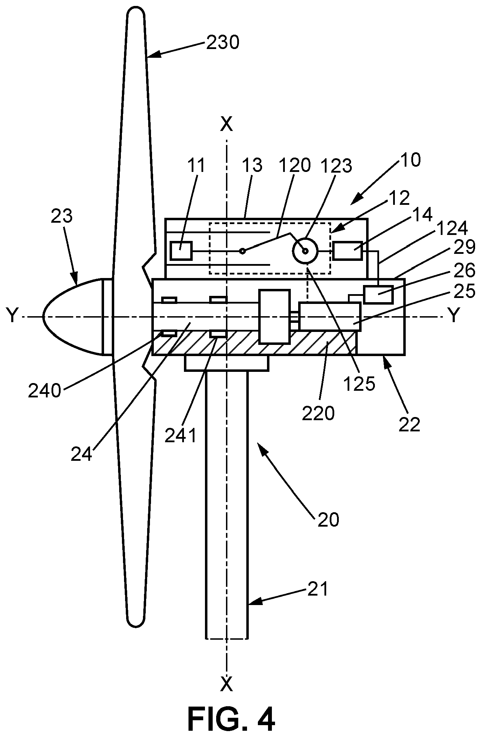

With reference to figures 3a, 3b and 4, embodiments of an active vibration controlling device 10 for a wind turbine 20 will now be disclosed. The wind turbine 20 may be an onshore wind turbine or an offshore wind turbine, in which case the wind turbine may be floating on a water body such as a sea or a lake, or fixed to the waterbed.

The wind turbine comprises a mast 21 which may be generally rectilinear and extend along an axis X-X. In embodiments, the mast 21 may have a shape that is widening from the upper end where the nacelle is mounted, towards the base. For instance, the mast may comprise a plurality of legs joining at the upper end of the mast and assembled at their base on a common platform. In This case, the axix X-X of the mast is interpreted as the axis joining the upper end to the center of the base. If the mast comprises a plurality of legs, the center of the base of the mast is at the center of the basis of the legs. In operation, the axis X-X is supposed to extend vertically although, in particular for floating wind turbine, the axis may be offset from the vertical when the wind turbine is subject to wind or waves. The wind turbine also comprises a nacelle 22, mounted on top of the mast 21 and extending along an axis Y-Y, which is transverse to the axis of the mast, generally perpendicular to the axis of the mast. The nacelle 22 is rotatably mounted to the mast about the axis X-X of the mast, in order to be orientable according to the direction of the wind.

The wind turbine further comprises a rotor 23, rotatably mounted on an end of the nacelle 22. The rotor 23 comprises a plurality of blades, for instance three blades 230. Each blade may be pivotably mounted around its respective axis. The nacelle 22 of the wind turbine further encloses a main shaft 24 which is rotationally fixed to the rotor 23 and is induced to rotate by the rotor, which is itself induced to rotate by the force applied by the wind on the blades. The main shaft 24 extends in a direction transverse to the axis of the mast, for instance perpendicular to said axis, i.e. parallel to the axis Y-Y of the nacelle. Alternatively, the angle of the main shaft may be offset by an angle, for instance of less than 10°, with respect to the axis Y-Y of the nacelle. The nacelle 22 may comprise a bedplate 220, forming a support for the main shaft 24, which may be mounted to the bedplate via main bearings 240, 241. The nacelle 22 further includes a gearbox 27 and an electrical generator 25, in particular an alternator, that converts the rotational energy of the rotor into electricity. The nacelle 11 of the wind turbine further comprises electrical transmission means as well as control means that are not detailed here and not shown in the figures.

As explained above, the wind turbine 20 is subject to oscillations produced at various excitation frequencies. Some of the excitation frequencies may be variable and hardly predictable, such as the frequency of the waves in the case of an offshore wind turbine, but some of the excitation frequencies are well known and predictable. This is the case for the 1p, 3p and 6p (etc.) excitation frequencies of the wind turbine, corresponding respectively to the frequency of rotation of the rotor, the frequency at which the blades pass in front of the mast, and its multiples. In what follows, the terms "3p excitation frequency" will be used to designate the frequency at which the blades pass in front of the mast, as the wind turbines generally comprise three blades, but the same wording is also applicable for a different number of blades, for instance four or five blades.

Accordingly, an active vibration controlling device 10 is disclosed that enables counteracting the oscillations induced on the wind turbine at at least one determined and predictable excitation frequency. The vibration controlling device comprises an inertial mass 11 and a driving device 12 suitable for moving the inertial mass in translation along an axis, which is transverse to the direction of the mast X-X, and preferably perpendicular to the direction of the mast. The translation axis of the mast may be parallel to the axis of the nacelle Y-Y.

The driving device 12 is configured for moving the inertial mass 11 according to an oscillatory movement suitable for inducing, on the wind turbine, a load that is variable with time, in particular oscillatory, and which counteract the oscillations produced at said excitation frequency. The load that is produced by the motion of the mass extends parallel to the direction of motion of the mass, i.e. is extends perpendicular to the direction of the mast and parallel to the direction of the nacelle.

By "active", it is thus meant that the motion of the mass is actively controlled and requires a controllable source of energy for setting the desired motion. In particular, the frequency of the oscillatory motion of the mass is controlled to correspond to said excitation frequency, and the phase of the oscillatory motion of the mass is also controlled such that the motion of the mass induces a load in opposition of phase with the oscillations induced at said excitation frequency.

The active vibration controlling device 10 must thus be distinguished from a passive damping device in which an inertial mass is urged to move by the movement of the structure, i.e. of the wind turbine itself, according to a frequency that is neither controlled nor predictable.

According to an embodiment, the active vibration controlling device 10 is configured for generating a variable load counteracting the oscillations induced on the wind turbine by the motion of the blades passing in front of the mast, i.e. the oscillations induced at the 3p excitation frequency. In this case, the driving device 12 is configured for moving the inertial mass 11 according to an oscillatory movement having a frequency equal to the 3p excitation frequency, i.e. which is three times the rotation frequency of the rotor. The phase of the oscillatory movement of the inertial mass is adapted to the phase of the motion of the blades, such that the maximum axial load induced by the motion of the mass on the wind turbine occurs simultaneously to a maximum axial load induced in an opposite direction by the motion of a blade passing in front of the mast. In other words, the phase of the active vibration controlling device 10 is set to minimize a load variation on the mast during a full rotation of the blades.

In embodiments, the driving device 12 for moving the mass along its translation axis may comprise a rod-crank system, where the rod is connected to the inertial mass and the crank is connected to a rotating shaft. As commonly known, a rod-crank system enables converting a rotational movement of a rotating shaft to which the crank is connected into a translational movement of the mass. Accordingly, the position x(t) of the inertial mass is as follows:

$$x(t) = r\cos\alpha(t) + \sqrt{\ell^2 - r^2\sin^2\alpha(t)}$$

where r is the length of the rod, I is the length of the crank, and alpha the angle of the crank as measured from the top dead center. The phase of the motion of the mass may therefore be set according to the angular position of the blades in order that the motion of the mass minimizes the load variation on the mast.

According to embodiments shown in figures 3a and 3b, the active vibration controlling device may be integrated within the wind turbine 20, preferably within the nacelle 22 of the wind turbine. Indeed, as the nacelle is rotatably mounted on the mast, the load applied to the mast by the motion of the blades depends on the orientation of the nacelle. Mounting the active vibration controlling device within the nacelle, with a translation axis of the inertial mass 11 parallel to the axis Y-Y of the nacelle or of the main shaft 24 thus ensures that the translation axis of the inertial mass is properly oriented with respect to the oscillations that are counteracted. If the active vibration controlling device 10 is mounted within the mast 21, for instance, it requires that the translation axis of the inertial mass be orientable about the axis of the mast.

According to a first embodiment shown in figure 3a, when the active vibration controlling device 10 is integrated within the wind turbine, the rotor 23 of the wind turbine may be used as the source of mechanical energy for moving the inertial mass, and the driving device 12 may comprise a mechanical transmission device 121 for drawing rotational power of the rotor, and a conversion device 122 for converting the rotational power into the oscillatory movement of the mass. For instance, the mechanical transmission device 121 may comprise one or more gears, a toothed pulley or a chain for transmitting the rotational power of the rotor to a secondary shaft, and the conversion device 122 may comprise a rod-crank system. The mechanical transmission device may also be configured to apply a desired reduction ratio to the frequency of rotation of the rotor. According to a non-limiting example, when the active vibration controlling device is configured to counteract oscillations produced at the 3p oscillation frequency, the power transmission device may be configured to multiply the rotation frequency at the rotor by the number of blades (e.g. 3). As shown in the example of figure 3a, the transmission device 121 may comprise first gears or a toothed pulley 1210 for transmitting the rotational power of the rotor to a secondary shaft 1211 extending parallel to the axis of the rotor, and second gears 1212 angled at 90°, for converting the rotational motion of the secondary shaft into a rotational motion that is perpendicular to the secondary shaft. The crank of the rod-crank system 122 is mounted on the gear which axis of rotation is perpendicular to the second axis, thus enabling a motion of translation of the rod and of the mass which is parallel to the axis of the rotor.

Alternatively, and as shown in figure 3b, the driving device 12 of the active vibration controlling device 10 may comprise a motor 123, in particular an electrical motor that may be fed by an electrical system of the turbine, such as a battery, an auxiliary power unit, the generator 25 of the turbine or any electrical component receiving electrical power converted from the power issued from the generator. The electrical motor may also be fed by the grid to which the turbine is injecting the generated power. In embodiments, the driving device may also comprise an alternator 126 configured for converting rotational power of the rotor into electrical power, and the motor 123 is fed by said alternator. The driving device may in that case also comprise a conversion device 122 for converting a rotational power of the motor's shaft into the oscillatory movement of the mass.

When the active vibration controlling device comprises a separate motor 123, it may also comprise a controller 14 configured to receive information relative to the operation of the wind turbine, such as the rotational speed of the rotor, or the frequency of rotation of the blades, and the phase of the motion of the blades, i.e. their angular position relative to the mast, and synchronize the oscillatory translation of the mass accordingly. The controller 14 can comprise a computing device comprising a processor, microprocessor, or microcontroller, a memory storing instructions executed by the computing device, and a communication interface enabling the controller to receive the above-mentioned information. In embodiments, the wind turbine 20 comprises a computing system 26 configured for controlling and monitoring the operation of the wind turbine, in particular for controlling and monitoring the generator's operation and the rotor shaft speed, and the communication interface 124 is configured for connecting the controller to said computing system, either via a wired communication (e.g. using an Ethernet cable) or a wireless communication (e.g. by Bluetooth or WiFi protocols). Alternatively, the active vibration controlling device 10 may comprise at least one additional sensor (not shown) for obtaining the above-mentioned information and providing the same to the controller 14.

As shown in the example of figures 3a and 3b, the active vibration controlling device may be positioned as close as possible to the mast so that the path of the load induced by the movement of the inertial mass is reduced. For instance, the active vibration controlling device may be mounted on the bedplate of the nacelle, adjacent to the main shaft.

According to another embodiment shown in figure 4, the active vibration controlling device 20 may be provided as a stand-alone product that may be mounted on a wind turbine after the assembly of the wind turbine, for instance during the service life of the wind turbine. Thus, it is possible to provide active vibration control even for a wind turbine that has not been initially designed and produced to incorporate the system 10.

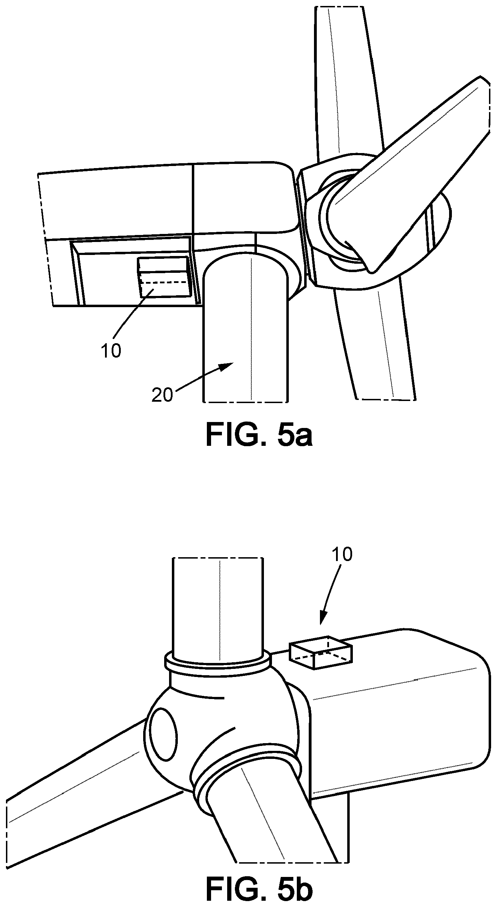

In that case, the active vibration controlling device 10 comprises an enclosure 13 in which the inertial mass 11 and driving device 12 are contained, and the enclosure 13 can be mounted on an outer wall 29 of the wind turbine, for instance on an outer wall of the nacelle. Figures 5a and 5b show exemplary implementations where the active vibration controlling device 20 as a stand-alone product is mounted on respectively a lower wall or an upper wall of the nacelle. In any case, active vibration controlling device is preferably mounted such that the translation axis of the inertial mass extends perpendicularly to the axis X-X of the mast.

Further, when the active vibration controlling device 10 is provided as a stand-alone product, it preferably comprises a controller 14 as mentioned above, configured to receive information relative to the operation of the wind turbine, and which may be connected to a computing system 26 of the wind turbine and/or sensors by a communication interface 124. Here also, the communication between the computing system 26 and the controller 14 may either be wired (e.g. using an Ethernet cable) or wireless (e.g. by Bluetooth or WiFi protocols).

The driving device 12 of the active vibration controlling device 10 also includes in that case a motor 123 and an actuator, such as a conversion device 122 for converting the rotational power of the motor's shaft into the translation movement of the mass. The motor 123 is preferably an electrical motor and the active vibration controlling device further includes a source of electrical energy, which may be either a battery, or an electrical connection 125 with the electrical generator of the wind turbine.

Thus, the active vibration controlling device 10 as a stand-alone device may be a designed as a so-called "plug and play" system, which may be mounted on a wall of the nacelle, and optionally connected to an electrical system of the wind turbine for the supply of electrical energy, and/or to the computing system of the wind turbine for the provision of the information relative to the operation of the turbine. The controller 14 then controls operation of the driving device 12, and in particular of the motor 123, to drive the inertial mass 11 according to the desired oscillatory movement. In a preferred embodiment in which the oscillatory movement is configured to counteract oscillations incurred by the blades of the wind turbine passing in front of the mast, the controller is configured to received information about the frequency of rotation and phase of the blades 230, and to control the driving device 12 to drive the inertial mass 11 according to an oscillatory movement having the same frequency as the frequency of rotation of the blades, i.e a frequency of n times the frequency of a full rotation of a blade for a n-bladed rotor, and which produces oscillations in phase opposition with the oscillations produced by the blades.

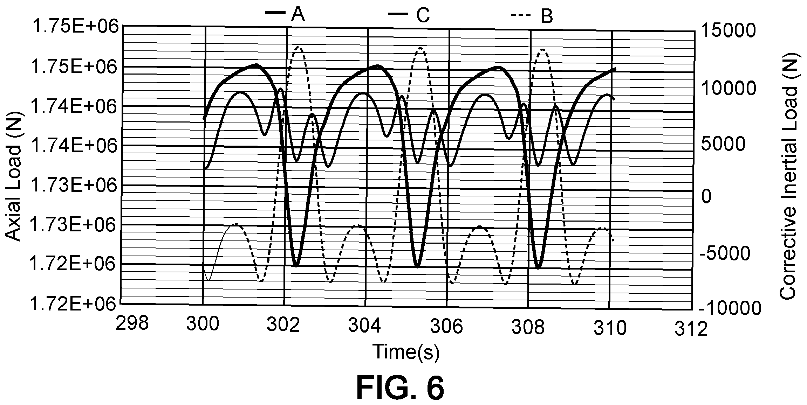

Fig. 6 represents an example of simulation of an axial load applied to the mast of a wind turbine with and without implementing an active vibration control. The simulation is performed on a wind turbine having a power of 15MW, a mast weighing 860 tons, a rotor and nacelle assembly weighing 1017 tons and an inertial mass of 1.5 ton. Curve A represents the axial load on the mast incurred by the passage of the blades, curve B represents the corrective inertial load incurred by the inertial mass and curve C represents the corrective loads induced by the blades. According to this simulation, an inertial mass moved with an oscillatory frequency corresponding to the 3p frequency and with a phase determined to maximize load variation reduction on the mast, enables

List of numeral references:

- 10 : Active vibration controlling device
- 11: eccentric masses
- 12 : driving device
- 121 : mechanical transmission device
- 1210: first gears
- 1211 : secondary shaft
- 1212 : second gears
- 122 : conversion device
- 123 : motor
- 124 : communication interface
- 125 : electrical connection
- 126 : alternator
- 13 : enclosure
- 14 : controller
- 20 : wind turbine
- 21 : mast
- 22 : nacelle
- 23 : rotor
- 230 : blades
- 24 : main shaft
- 25 : generator
- 26 : computing system

- 27 : gearbox
- 29 : outer wall

## Claims

1. An active vibration controlling device (10) for a wind turbine (20) having a mast (21), a nacelle (22) and a plurality of rotating blades (230), the device comprising

    - at least one inertial mass (11), and
    - a driving device (12) suitable for driving the mass in translation along an axis,

    wherein the active vibration controlling device is configured for driving the mass according to an oscillatory movement suitable to generate a variable load on the wind turbine counteracting oscillations produced at at least one excitation frequency of the wind turbine.

2. The active vibration controlling device (10) according to claim 1, wherein the at least one excitation frequency of the wind turbine is the frequency of the rotating blades passing in front of the mast.

3. The active vibration controlling device (10) according to claim 1 or 2, wherein the translation axis is perpendicular to the direction of the mast (21) of the wind turbine.

4. The active vibration controlling device (10) according to any of the preceding claims, wherein the driving device (12) comprises a rod-crank system.

5. The active vibration controlling device (10) according to any of the preceding claims, further comprising an enclosure (13) containing at least the inertial mass (11) and driving device (12), and the enclosure (13) is mounted on an outer wall (29) of the wind turbine (20).

6. The active vibration controlling device (10) according to claim 5, further comprising a controller (14), configured to receive information relative to the operation of the wind turbine, and to control the driving device (12) to drive the motion of the inertial mass (11) according to the received information.

7. The active vibration controlling device (10) according to claim 5 or 6, wherein the driving device (12) comprises an electrical motor (123) and an actuator (122), and the active vibration controlling device (10) further comprises a source of electrical energy chosen among a battery of the active vibration controlling device and a connection interface (125) to an electrical system of the wind turbine.

8. A wind turbine (20) comprising a mast (21), a nacelle (22) and a plurality of rotating blades (230), the wind turbine further comprising an active vibration controlling device (10) according to any of the preceding claims.

9. The wind turbine (20) according to claim 8, wherein the active vibration controlling device is located within the nacelle (22).

10. The wind turbine (20) according to any of claims 8 or 9, wherein the wind turbine comprises a rotor (23) rotatably mounted on the nacelle and on which are mounted the blades, and wherein the driving device (12) of the active vibration controlling device comprises a mechanical transmission device (121) for drawing rotational power from the rotor, and a conversion device (122) suitable for converting the rotational power into the oscillatory movement of the mass.

11. The wind turbine (20) according to any of claims 8 or 9, wherein the wind turbine comprises a rotor (23) rotatably mounted on the nacelle and on which are mounted the blades, wherein the driving device (12) of the active vibration controlling device comprises an electrical motor (123) having an output shaft, a source of electrical energy feeding the electrical motor, chosen among an electrical system of the wind turbine and an alternator configured for converting rotational power of the rotor into electrical power, and the driving device (12) further comprises a conversion device for converting a rotational power of the electrical motor's output shaft into the oscillatory movement of the mass.

12. The wind turbine (20) according to the preceding claim, wherein the mechanical transmission device (121) comprises one of a gearbox, a toothed pulley or chain.

13. The wind turbine (20) according to any of the preceding claims, wherein the wind turbine is a floating wind turbine.

FIG. 1

FIG. 2

**FIG. 3a**

22    10

23

11

24    240    241    27    25

220

122 123 12

230

21    FIG. 3b

FIG. 4

FIG. 5a

FIG. 5b

**FIG. 6**

Europäisches
Patentamt

European
Patent Office

Office européen
des brevets

# EUROPEAN SEARCH REPORT

**Application Number**

EP 23 16 3478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H04 64743 A (SHIMIZU CONSTRUCTION CO LTD) 28 February 1992 (1992-02-28) * claim 1; figure 1 * | 1,2,6,13 | INV. F03D7/02 F03D13/25 F16F7/10 |
| Y | | 3,5,7-9, 11,12 | |
| A | | 4,10 | |
| | ----- | | |
| Y | EP 3 341 627 B1 (FM ENERGIE GMBH & CO KG [DE]) 25 September 2019 (2019-09-25) * claim 1; figures fig. 10a, 10b, 10c and 10d; * | 3,5,7-9, 11,12 | |
| | ----- | | |

**TECHNICAL FIELDS SEARCHED (IPC)**

F03D
F16F

The present search report has been drawn up for all claims

| Place of search | Date of completion of the search | Examiner |
|---|---|---|
| The Hague | 10 August 2023 | Król, Marcin |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
........................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 23 16 3478

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2023

| Patent document cited in search report | | Publication date | Patent family member(s) | | Publication date |
|---|---|---|---|---|---|
| JP H0464743 | A | 28-02-1992 | JP | 3136325 B2 | 19-02-2001 |
| | | | JP | H0464743 A | 28-02-1992 |
| EP 3341627 | B1 | 25-09-2019 | CN | 108350969 A | 31-07-2018 |
| | | | DK | 3341627 T3 | 06-01-2020 |
| | | | EP | 3341627 A1 | 04-07-2018 |
| | | | ES | 2763035 T3 | 26-05-2020 |
| | | | JP | 6965239 B2 | 10-11-2021 |
| | | | JP | 2018529901 A | 11-10-2018 |
| | | | KR | 20180044383 A | 02-05-2018 |
| | | | PT | 3341627 T | 11-12-2019 |
| | | | US | 2018252287 A1 | 06-09-2018 |
| | | | WO | 2017036581 A1 | 09-03-2017 |

EPO FORM P0459

For more details about this annex : see Official Journal of the European Patent Office, No. 12/82